# EUROPEAN PATENT SPECIFICATION

(11) **EP 1 861 275 B1**
(45) Date of publication and mention of the grant of the patent: **25.06.2008**
(21) Application number: 06708739.5
(22) Date of filing: 13.03.2006
(51) Int. Cl.: B60K 15/077

(54) **FUEL RESERVOIR WITH INTEGRALLY MOLDED VALVE**
BRENNSTOFFBEHÄLTER MIT INTEGRAL GEFORMTEM VENTIL
RÉSERVOIR DE CARBURANT AVEC UNE VANNE INTÉGRALEMENT MOULÉE

(30) Priority: 14.03.2005 US 661406 P
(43) Date of publication of application: 05.12.2007
(73) Proprietor: Inergy Automotive Systems Research (Société A.), 1120 Brussels (BE)
(72) Inventor: TIPTON, Larry, Sterling Heights, Michigan 48310 (US); REUTHER, Paul, Oxford, Michigan 48371 (US)
(74) Representative: Jacques, Philippe
(86) International application number: PCT/EP2006/060653
(87) International publication number: WO 2006/097444

(56) References cited:
- EP-A- 0 959 242
- US-A1- 2001 055 530

## Description

To date, fuel delivery modules (FDM) require a substantial reservoir capacity to provide enough reserve fuel for low fuel considerations.

It is namely so that in certain circumstances, for example, when the volume of fuel contained in the fuel tank of an automotive vehicle falls below a certain minimum level and this vehicle travels through a prolonged curve, uphill or downhill, or if it is otherwise subjected to sudden and pronounced changes in speed, direction, etc., the fuel could be displaced to one side of the tank to such an extent that the inlet end of the dip tube, which forms part of the fuel-intake tubing, is at least temporarily no longer submerged in the fuel. Under such conditions, the dip tube sucks out air instead of fuel, thereby producing an interruption in the feed fuel flow that impedes the proper operation of the internal-combustion engine.

In order to avoid such problems, as can be observed in US 2001/055530 A1, most fuel tanks include a reservoir i.e. a subtank intended to trap fuel and act as a reserve. To perform this function, conventional fuel reservoirs are equipped with a first fill valve i.e. a one way check valve mounted in the bottom of it and allowing fuel into the bottom of the reservoir, but not allowing fuel out. This allows the reservoir to fill passively as the tank is filled, while keeping fuel from leaving the reservoir during low fuel conditions. This device is a necessary component in a conventional fuel module reservoir. Reducing the cost of this device is the problem this invention aims to solve.

There are several designs known for the above mentioned first fill valves. Some of them use a disk to respectively open/close apertures in the reservoir's bottom, and an additional component, such as a cage, to trap the disk on top of the holes. This cage is an additional part that has to be welded in place. Another known design option is those of umbrella style valves. However, such valves tend to be more expensive than disk valves and there have been issues in the past with sealing at low fuel levels after durability.

To this end, the present inventions concerns a new design for a disk valve, which is very simple, reliable and non expensive.

Hence, the present invention concerns a fuel reservoir having a bottom and a valve integrally molded with said bottom and comprising :
- a disk or flap having a hole in it;
- a post that fits through the hole in the disk and which is integrally molded with the reservoir's bottom; and
- at least one hole through the reservoir's bottom which is positioned close to the post and in a way such that the disk covers it when positioned in its relief position.

Preferably, there are several such holes surrounding the post.

The essential feature of said design resides in the fact that the disk is retained in the reservoir, on top of the hole(s), through at least one post (pin) which is integrally molded with the reservoir's bottom. There could be one or several post(s) which could either extend through corresponding holes in the disk or could grip said disc like fingers.

Preferred embodiments of the invention are pictured in figures 1 to 4, which show the following :
- figures 1A and 1B: on embodiment of the basic concept, wherein the tank bottom (5) comprises 6 holes (4) surrounding a post (3) intended to be fitted through a hole (2) of the disk (1);
- figure 1C: a variant of the disc shown in figures 1A and 1B, said disc being of squared shape;
- figure 1D: the way of fixing the disc to go from fig.1A to fig. 1B;
- figure 2: a variant with 4 holes (4) and a surrounding stair (4') comprised of an interrupted wall (or several posts);
- figures 3 and 4: a variant with 3 holes (4) in the shape of slots defining an interrupted annular hole (4").

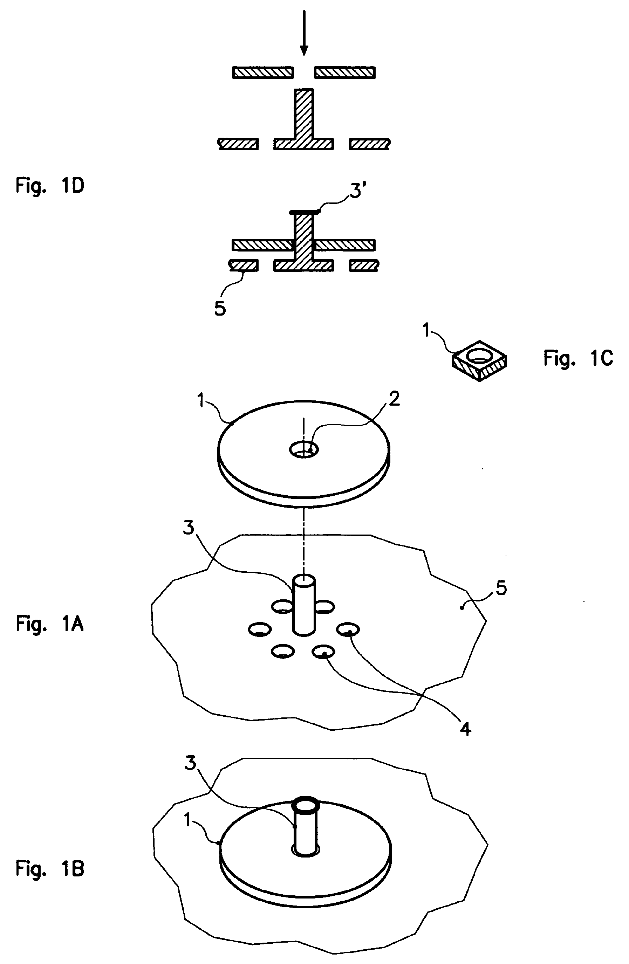

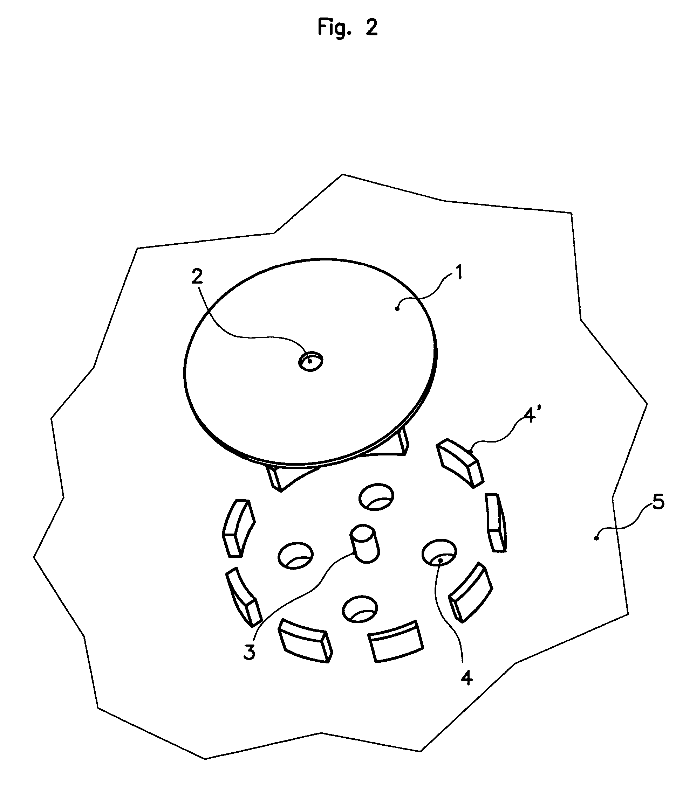

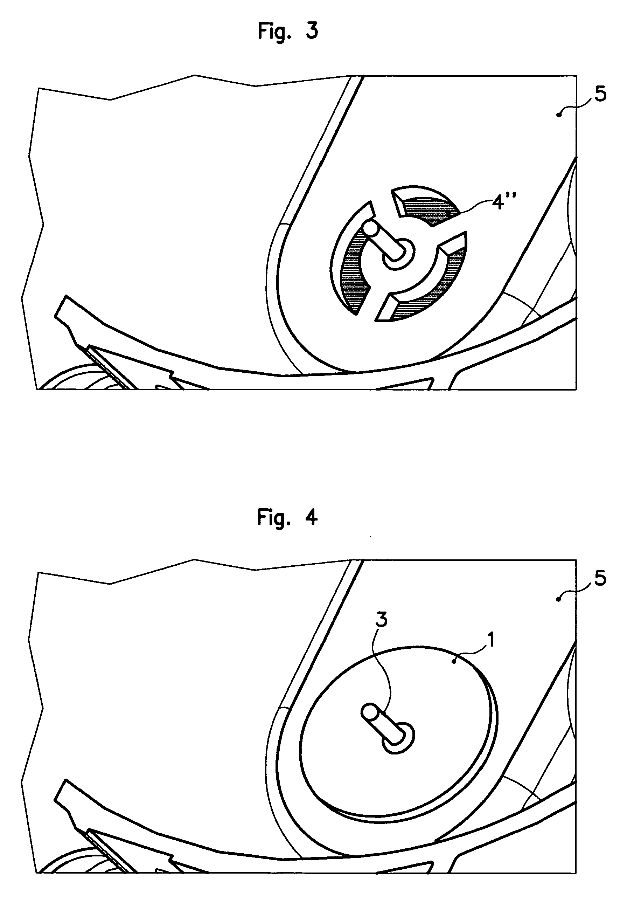

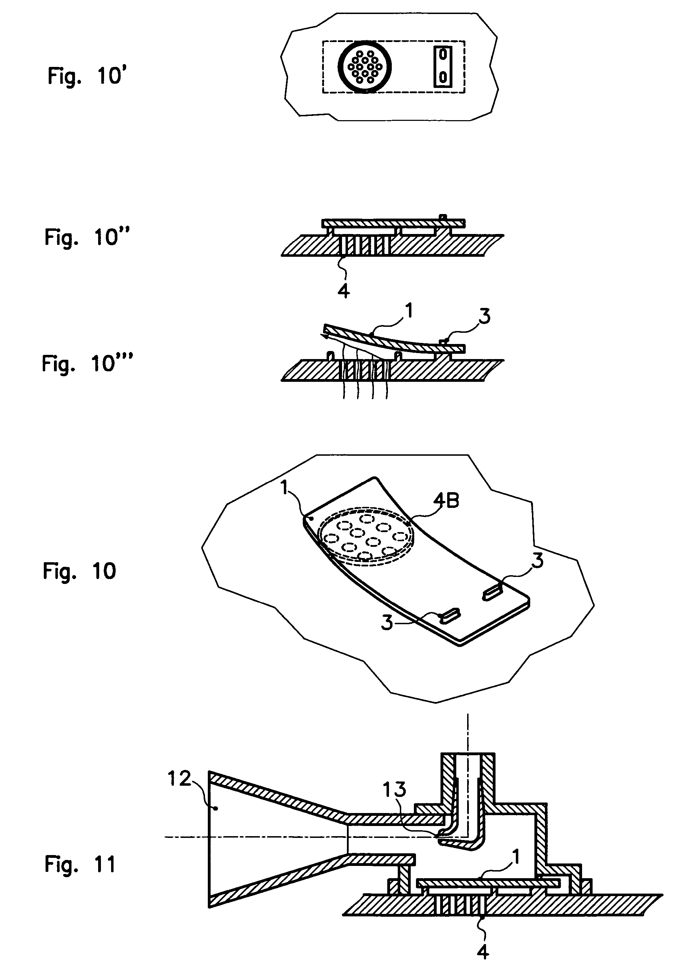

They are all characterized by the presence of the following components :
- A piece of material (1, called a disk, although it might be in the shape of a square like in fig. 1C, or of a rectangular shape like in fig. 10) with a hole (2) in it, which may be in its center (like in most of the pictured embodiments), on the side (periphery) of it (as in fig. 10), or any where else.
- At least one post (3) that fits through the hole in the disk (1).
- Several holes (4) through the reservoir's bottom (5) which are positioned around (in the neighborhood of) the post (3) and in a way such that the disk (1) covers them when positioned with the post (3) inside its hole (2) and when is in its relief position (no pressure lifting the disk). These holes (4) may be of any shape: circular (like in figures 1 and 2), or in the shape of slots (like in figures 3 and 4).

As mentioned above, the post is integrally molded with the tank reservoir and is thus of the same material, while the disk may be of another material. Polyacetals, and in particular, polyoxymethylene (or POM) gives good results for the reservoir, while elastomers and in particular, fluorosilicone gives good results for the sealing disk.

Several techniques are available for fixing the disk on the post.

According to one of them (illustrated in fig. ID), the disk is first assembled to the post and then the post is distorted or another piece (3') is put on top of the post, such that the disk is trapped underneath.

An alternative is to have the disk of an elastic material and have an expansion in the diameter in the distal end of the post. The hole in the disk would be smaller than the diameter at the end of the post. The hole in the disk would then temporarily stretch over the distal end of the post and in that way be retained to the post.

In both cases, the post has a diameter smaller that the diameter of the hole in the disc on its entire length but has a distal end with a diameter larger than the one of the hole in the disk. In fact, the "diameter" concept may be generalized to holes/distal ends other than circular ones so that in fact, the sections (of the hole and the post) merely have to be such that they either block or allow the passage of the post though the hole.

According to a preferred embodiment, the bottom of the reservoir is provided with a relief/design enabling the tight sealing of the reservoir when the disk lies on the bottom. Good results have been obtained when providing a sealing bead surrounding the post and/or around the underside perimeter of the disk and/or around the holes in the bottom of the reservoir.

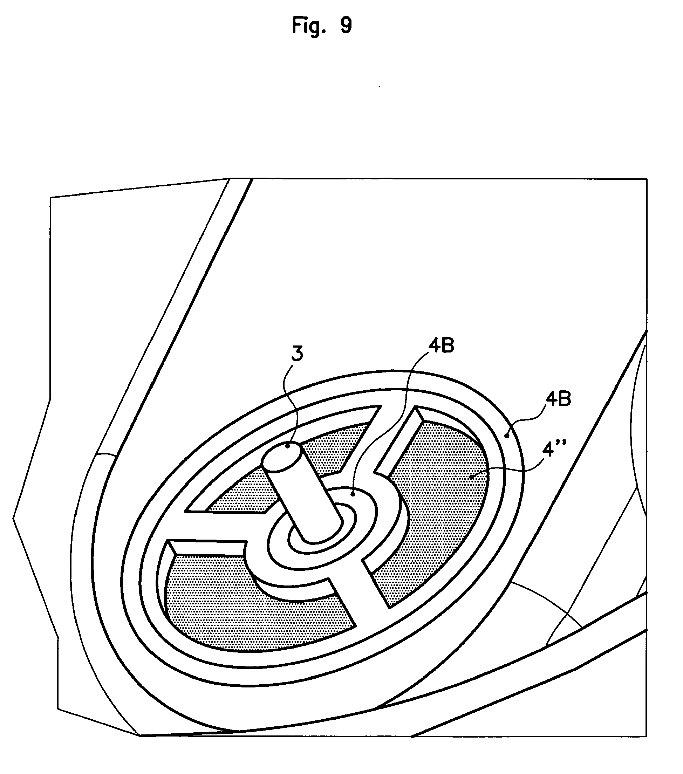

In the case of a circular disk, 2 circular sealing beads (4b, as pictured in figure 9 for instance) are effective in reducing the amount of leakage through the valve interface. When the valve is in its relief position, the disk rests on said beads (generally of circular and even, concentric form). It is worth noting that said sealing beads may be located on the disk instead of on the reservoir bottom.
- In the case of a disk of rectangular shape, only one sealing bead (4b) may be enough: see fig. 10 for instance.

With the design of figures 1, 3 and 4, there can be a problem if the pump strainer (or another component) covers the disk, since then the disk would not be allowed to lift and would block the holes and preventing fuel from entering into the reservoir.

Accordingly, in a preferred embodiment (pictured in figure 2), the holes are surrounded by a "wall" (kind of stair) with slots cut into it and which has a diameter beyond the diameter of the disk so that the disk can move (slide) into it. This stair (wall) is high enough to prevent something (like the fuel strainer) from covering the disk from the top. If the top of the wall is covered by the strainer, the slots will still allow flow to travel from the holes in the bottom of the reservoir to around the periphery of the wall when the disk is lifted.

According to another embodiment, the reservoir according to the invention is filled through a jet pump (i.e. a device comprising a tube ending with an orifice through which a flow passes which generates a depression by Venturi effect). This jet pump sucks fuel from the fuel tank outside the reservoir through the holes of the disk valve.

According to a preferred embodiment, this jet pump is in one piece with a housing (into which it actually ends) which also integrates a mixing tube and which covers the disc valve. More preferably, the jet pump is also integrated in a one piece connector which is the object of a co-pending application. This piece preferably has the form of a "T" with 3 branches, 2 of them being connected respectively to a main fuel pump and to a fuel filter and the third one integrating the jet pump. The orifice of the jet pump is preferably located right in front of the entrance of the mixing tube. By doing so, the fuel flow coming from the fuel pump blows right into the entrance of the mixing tube and entrains fuel from the fuel tank though the holes of the valve according to the invention.

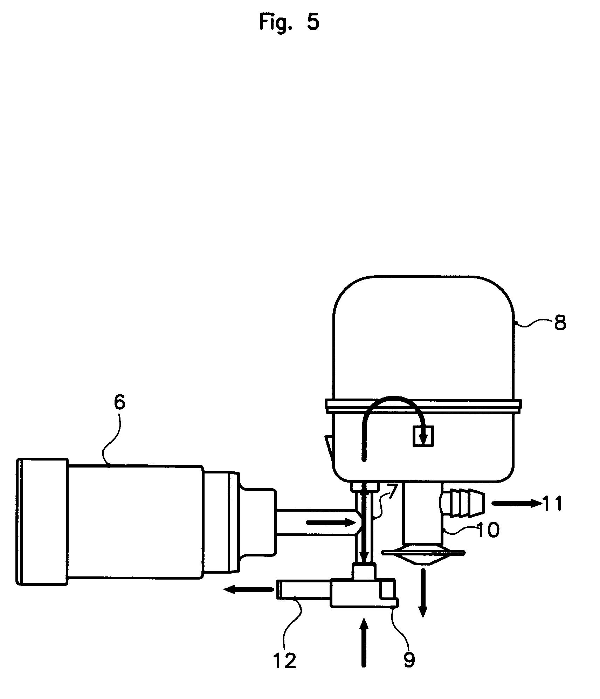

This embodiment (and several preferred features thereof) is illustrated in a non limitative way by figures 5 to 8, and 11. In all figures, identical numbers designate similar or identical parts.

Figure 5 shows how a main fuel pump (6) discharges into a "T" connector (7) a fuel flow which is split into a flow to a fuel filter (8) and a flow to a jet pump orifice integrated in a housing (9) molded in one piece with the "T". The fuel exits the fuel filter (8) through a pressure regulator (10) which routes the required amount of fuel to an engine (11, not pictured) and returns the rest to the reservoir. The jet pump integrated in the housing (9) sucks fuel from the fuel tank through an integrally molded valve according to the invention (not pictured) and a mixing tube (12) discharges into the reservoir, a mixed flow of fuel coming from the pump (6) on one side (through the "T" (7) and the jet pump) and from the fuel tank (through the integrally molded valve) on the other side.

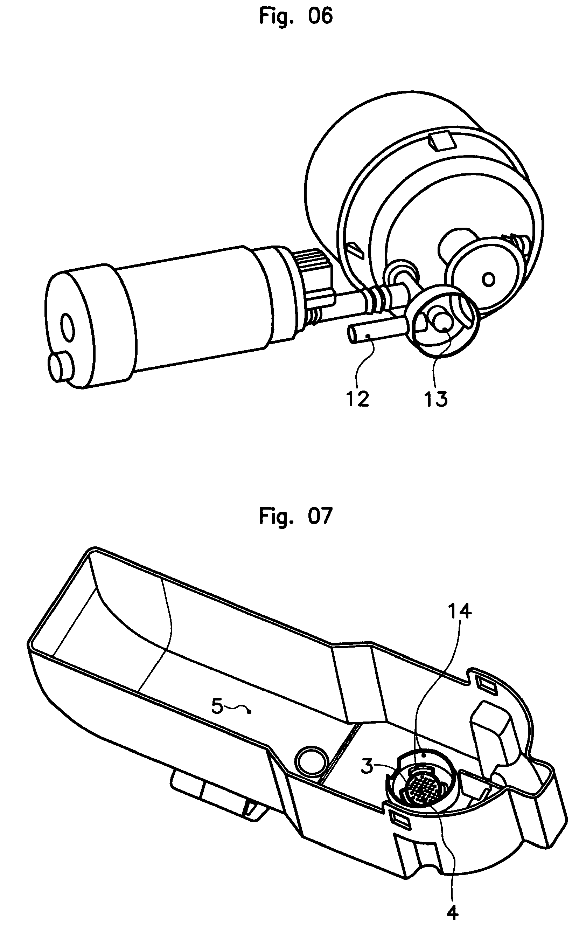

Figure 6 shows the same assembly but viewed from underneath to illustrate how the small jet pump orifice (13) blows right into the mixing tube (12), entraining fuel from the fuel tank.

Figure 7 shows the bottom (5) of the reservoir wherein the system of figures 5 and 6 is intended to be mounted. This bottom (5) comprises an integrally molded disk valve according to the invention which is surrounded by a perimeter wall (14). This valve comprises a rubber disk (not shown) which:
- is maintained by a post (3);
- is opened by fuel being drawn into the holes (4) of the bottom of the reservoir by the jet flow; and
- which seals said holes (4) when the jet flow stops to retain reservoir capacity.

This valve eliminates the need for the check valve in the pump outlet to prevent fuel from siphoning out of the reservoir.

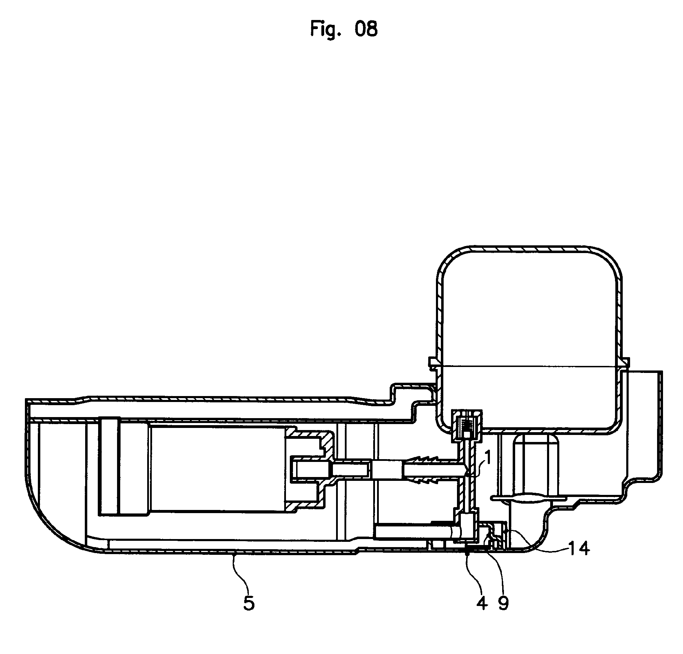

Figure 8 shows a longitudinal cut into the system assembled in the reservoir and shows the holes (4) into the bottom of it, holes through which fuel can be sucked from the fuel tank where the reservoir is located (not shown). In this assembly, the housing (9) integrating the jet pump (13) presses into the perimeter wall (14) of the reservoir bottom (5) to function as a partial seal to allow the jet flow to draw fuel through the floor of the reservoir rather than recirculation of the fuel inside the reservoir.

Figures 10 and 11 show the embodiment according to which a rectangular disk (1) is fixed on its side by 2 posts (3). It has the following advantages over the circular disk with one central post pictured in the other figures :
- only one sealing bead (4b) is required;
- the walls (4') required to prevent the disk (1) from becoming uncentered are eliminated; these walls (4') may hinder the incoming fuel flow;
- it works well in conjunction with a jet pump (13) sucking fuel from the fuel tank outside the reservoir through the holes (4) of the valve (as pictured in fig. 11). The method of securing the disk (flap) (1) itself may reduce the amount of pressure drop caused by the valve itself when the jet pump (13) is operating.

## Claims

1. Fuel reservoir having a bottom (5) and a valve integrally molded with said bottom and comprising :
- a disk or flap (1) having a hole (2) in it;
- at least one post (3) that fits through the hole (2) in the disk and which is integrally molded with the reservoir's bottom (5); and
- at least one hole (4) through the reservoir's bottom (5) which is positioned close to the post (3) and in a way such that the disk (1) covers it when positioned in its relief position.

2. Fuel reservoir according to the preceding claim, wherein there are several holes (4) in the bottom (5) of the reservoir.

3. Fuel reservoir according to any of the preceding claims, wherein the disk (1) is in elastomeric material.

4. Fuel reservoir according to the preceding claim, wherein the post (3) has a diameter smaller that the diameter of the hole (2) on its entire length but has a distal end (3') with a diameter larger than the one of said hole (2).

5. Fuel reservoir according to any of the preceding claims, said reservoir's bottom (5) comprising a sealing bead (4b) surrounding the post (3) and/or around the underside perimeter of the disk (1) and/or around the holes (4) in the bottom (5) of the reservoir, so that the disk (1) rests on said beads when the valve is in its relief position.

6. Fuel reservoir according to any of the preceding claims, wherein the disk (1) is circular and wherein the hole(s) (4) is(are) surrounded by a wall with slots cut into it and which has a diameter beyond the diameter of the disk so that the disk can move into it.

7. Fuel reservoir according to any of claims 1 to 5, wherein the disk is rectangular and is fixed on its side by 2 posts (3).

8. Fuel reservoir according to any of the preceding claims, said reservoir comprising a jet pump (13) capable of filling it by sucking fuel from outside through the holes (4) of the disk valve.

9. Fuel reservoir according to the preceding claim, wherein the jet pump (13) is in one piece with a housing (9) which also integrates a mixing tube (12) and which covers the disc valve.

10. Fuel reservoir according to the preceding claim, wherein the jet pump (13) is also integrated in a one piece connector (7) having the form of a "T" with 3 branches, 2 of them being connected respectively to a main fuel pump (6) and to a fuel filter (8) and the third one integrating the jet pump (13) and wherein the jet pump (13) comprises a tube having an outlet orifice located right in front of the entrance of the mixing tube (12).

## Patentansprüche

1. Kraftstoffbehälter mit einem Boden (5) und einem integral mit dem Boden ausgebildeten Ventil, wobei der Behälter Folgendes umfasst:
- eine Scheibe oder Klappe (1) mit einem darin befindlichen Loch (2);
- mindestens einen durch das Loch (2) in der Scheibe passenden Pfosten (3), der integral mit dem Boden (5) des Behälters ausgebildet ist; und
- mindestens ein durch den Boden (5) des Behälters verlaufendes Loch (4), das nahe am Pfosten (3) und so positioniert ist, dass es von der Scheibe (1) abgedeckt wird, wenn sich diese in ihrer Entlastungsposition befindet.

2. Kraftstoffbehälter nach dem vorstehend aufgeführten Anspruch, bei dem mehrere Löcher (4) im Boden (5) des Behälters vorgesehen sind.

3. Kraftstoffbehälter nach einem der vorstehend aufgeführten Ansprüche, bei dem die Scheibe (1) aus elastomerem Material besteht.

4. Kraftstoffbehälter nach dem vorstehend aufgeführten Anspruch, bei dem der Pfosten (3) über seine gesamte Länge einen Durchmesser hat, der kleiner als der Durchmesser des Lochs (2) ist, aber ein distales Ende (3') mit einem Durchmesser hat, der größer als derjenige des Lochs (2) ist.

5. Kraftstoffbehälter nach einem der vorstehend aufgeführten Ansprüche, bei dem der Boden (5) des Behälters einen Abdichtungswulst (4b) umfasst, der den Pfosten (3) und/oder den Unterseitenumfang der Scheibe (1) und/oder die Löcher (4) im Boden (5) des Behälters umgibt, so dass die Scheibe (1) auf den Wülsten ruht, wenn sich das Ventil in seiner Entlastungsposition befindet.

6. Kraftstoffbehälter nach einem der vorstehend aufgeführten Ansprüche, bei dem die Scheibe (1) kreisförmig ausgebildet ist und das Loch/die Löcher (4) von einer mit eingeschnittenen Schlitzen versehenen Wand umgeben ist bzw. sind, deren Durchmesser größer als derjenige der Scheibe ist, so dass sich die Scheibe dort hineinbewegen kann.

7. Kraftstoffbehälter nach einem der Ansprüche 1 bis 5, bei dem die Scheibe rechtwinklig ausgebildet und an ihrer Seite durch zwei Pfosten (3) befestigt ist.

8. Kraftstoffbehälter nach einem der vorstehend aufgeführten Ansprüche, bei dem der Behälter eine Strahlpumpe (13) umfasst, die den Behälter **dadurch** befüllen kann, dass sie durch die Löcher (4) des Scheibenventils Kraftstoff von außen ansaugt.

9. Kraftstoffbehälter nach dem vorstehend aufgeführten Anspruch, bei dem die Strahlpumpe (13) einteilig mit einem Gehäuse (9) mit ebenfalls integriertem Mischrohr (12) ausgeführt ist, das das Scheibenventil abdeckt.

10. Kraftstoffbehälter nach dem vorstehend aufgeführten Anspruch, bei dem die Strahlpumpe (13) auch in einem einteiligen Verbinder (7) integriert ist, der die Form eines "T" mit 3 Abzweigen hat, von denen zwei mit einer Hauptkraftstoffpumpe (6) bzw. einem Kraftstofffilter (8) verbunden sind und der dritte die integrierte Strahlpumpe (13) beinhaltet, wobei die Strahlpumpe (13) ein Rohr mit einer Auslassöffnung umfasst, die sich unmittelbar vor dem Eintritt des Mischrohrs (12) befindet.

## Revendications

1. Réservoir de carburant possédant un fond (5) et une soupape moulée de manière solidaire avec ledit fond et comprenant:
- un disque ou un clapet (1) possédant un trou (2) dans celui-ci;
- au moins un montant (3) qui s'ajuste à travers le trou (2) dans le disque et qui est moulé de manière solidaire avec le fond (5) du réservoir; et
- au moins un trou (4) à travers le fond (5) du réservoir qui est positionné à proximité du montant (3) et de telle manière que le disque (1) le recouvre lorsqu'il est positionné dans sa position de décharge.

2. Réservoir de carburant selon la revendication précédente, dans lequel plusieurs trous (4) se trouvent au fond (5) du réservoir.

3. Réservoir de carburant selon l'une quelconque des revendications précédentes, dans lequel le disque (1) est en matériau élastomère.

4. Réservoir de carburant selon la revendication précédente, dans lequel le montant (3) possède un diamètre plus petit que le diamètre du trou (2) sur toute sa longueur mais possède une extrémité distale (3') d'un diamètre plus grand que celui dudit trou (2).

5. Réservoir de carburant selon l'une quelconque des revendications précédentes, ledit fond (5) du réservoir comprenant un bourrelet d'étanchéité (4b) entourant le montant (3), et/ou étant situé autour du périmètre de la face inférieure du disque (1) et/ou autour des trous (4) au fond (5) du réservoir, de sorte que le disque (1) repose sur lesdits bourrelets quand la soupape est dans sa position de décharge.

6. Réservoir de carburant selon l'une quelconque des revendications précédentes, dans lequel le disque (1) est circulaire et dans lequel le(s) trou(s) (4) est(sont) entouré(s) par une paroi avec des fentes découpées dans celle-ci et qui possède un diamètre supérieur au diamètre du disque de sorte que le disque peut se déplacer dans celui-ci.

7. Réservoir de carburant selon l'une quelconque des revendications 1 à 5, dans lequel le disque est rectangulaire et est fixé sur son côté par deux montants (3).

8. Réservoir de carburant selon l'une quelconque des revendications précédentes, ledit réservoir comprenant une pompe à jet (13) en mesure de remplir celui-ci en aspirant du carburant depuis l'extérieur à travers les trous (4) de la soupape à disque.

9. Réservoir de carburant selon la revendication précédente, dans lequel la pompe à jet (13) forme une seule pièce avec un carter (9) qui intègre également un tube de mélange (12) et qui recouvre la soupape à disque.

10. Réservoir de carburant selon la revendication précédente, dans lequel la pompe à jet (13) est également intégrée à un connecteur monobloc (7) possédant la forme d'un «T» avec trois branches, deux desquelles étant connectées respectivement à une pompe à carburant principale (6) et à un filtre à carburant (8) et la troisième intégrant la pompe à jet (13) et dans lequel la pompe à jet (13) comprend un tube possédant un orifice de sortie situé en regard de l'entrée du tube de mélange (12).
